# EUROPÄISCHE PATENTSCHRIFT

(11) **EP 3 862 710 B1**
(45) Veröffentlichungstag und Bekanntmachung des Hinweises auf die Patenterteilung: **04.10.2023**
(21) Anmeldenummer: 20212470.7
(22) Anmeldetag: 08.12.2020
(51) Int. Cl.: F27B 9/12, F27B 9/30, F27D 3/16, F27D 9/00, F27D 99/00, C21D 9/00, C21D 9/46, B32B 15/01, C21D 1/34, C21D 1/613, C21D 8/00, C21D 9/48, C21D 1/62, C21D 1/667, C21D 1/673

(54) **OFEN ZUR PARTIELLEN ERWÄRMUNG VON METALLBAUTEILEN**
FURNACE FOR PARTIAL HEATING OF METAL COMPONENTS
FOUR DE CHAUFFAGE PARTIEL DES COMPOSANTS MÉTALLIQUES

(30) Priorität: 10.02.2020 DE 102020103276
(43) Veröffentlichungstag der Anmeldung: 11.08.2021
(73) Patentinhaber: Benteler Automobiltechnik GmbH, 33102 Paderborn (DE)
(72) Erfinder: Glaser, Viktor, 33100 Paderborn (DE); Wesling-Schaefers, Markus, 59590 Geseke (DE); Lapsien, Rainer, 33142 Büren-Wewelsburg (DE)
(74) Vertreter: Osterhoff, Utz

(56) Entgegenhaltungen:
- WO-A1-2019/142783
- DE-A1-102011 011 258
- DE-A1-102013 107 870
- DE-A1-102017 107 549
- DE-B3- 10 256 621
- GB-A- 2 108 252

## Beschreibung

Die vorliegende Erfindung betrifft eine Anordnung aufweisend einen Ofen zur Erwärmung von Metallbauteilen gemäß den Merkmalen im Oberbegriff von Anspruch 1 sowie ein Verfahren zum Betreiben gemäß Patentanspruch 14.

Aus dem Stand der Technik ist das Erwärmen von Metallbauteilen zur nachfolgenden Bearbeitung bekannt. Insbesondere in der Stahlverarbeitung und hier ganz besonders bevorzugt in der Kraftfahrzeugindustrie wird die Warmumform- und Presshärtetechnologie verwendet. Dabei werden Blechplatinen oder auch bereits geformte Bauteile zumindest partiell auf eine Temperatur größer AC3 Temperatur erwärmt. Dies ist dabei die Austenitisierungstemperatur. Im Anschluss daran wird das Bauteil warm umgeformt und derart schnell abgekühlt, dass ein Härtungsprozess stattfindet. Hierbei wird ein hartes Werkstoffgefüge, im Wesentlichen martensitisches Werkstoffgefüge in dem zuvor vollständig austenitisierten Bereichen eingestellt.

Diese Bauteile sind somit aufgrund einer geringen Wandstärke besonders leicht und weisen eine hohe Steifigkeit auf. Einhergehend ist jedoch mit der hohen Härte auch eine Sprödbruchanfälligkeit bzw. geringe Duktilität.

Es ist dazu ferner aus dem Stand der Technik bekannt, sogenannte tailored properties einzustellen. Dies sind maßgeschneiderte Eigenschaften an einem Stahlblechbauteil. Mithin handelt es sich um Bereiche mit hoher Festigkeit, die insbesondere eine Zugfestigkeit größer 1200 MPa, bevorzugt größer 1400 MPa aufweisen. Andere Bereiche in dem Bauteil weisen eine demgegenüber höhere Duktilität und geringere Zugfestigkeit von kleiner 1400 MPa, insbesondere kleiner 1200 MPa und besonders bevorzugt kleiner 1000 MPa auf. In den Bereichen mit geringerer Zugfestigkeit ist ein weicheres Werkstoffgefüge eingestellt. Insbesondere sind hier Gefügebestandteile von Bainit, Ferrit und/oder Perlit vorhanden, so dass die Bereiche mit weicherem Werkstoffgefüge weniger und/oder gar keine Martenisitanteile aufweisen.

Damit in den weicheren Bereichen eine geringere Festigkeit eingestellt ist, ist eine unterschiedliche thermische Behandlung notwendig.

Aus dem Stand der Technik sind dazu unterschiedliche Möglichkeiten, das Bauteil partiell zu temperieren, bekannt. Beispielsweise ist aus der DE 102 56 621 B3 ein Ofen bekannt, in dem zwei unterschiedliche Zonen vorhanden sind, wobei in den Zonen voneinander verschiedene Temperaturen vorherrschen, die dann das Bauteil partiell unterschiedlich temperieren.

Nachteilig hierbei ist, dass die Wärmebehandlung über einen gewissen Zeitraum andauert. Dies können einige Sekunden, bis hin in einem längeren Durchlaufofen bis zu mehreren Minuten sein. Innerhalb der Wandstärke einer wärme-zu-behandelnden Blechplatine passt sich die Temperatur an. Dies geschieht aufgrund von Wärmeleitung an dem Übergangsbereich zwischen der Zone mit höherer Temperatur und der Zone mit geringerer Temperatur. Hier herrscht eine Temperaturdifferenz von beispielsweise mehr als 100, insbesondere mehr als 200 und sogar mehr als 300 °C. In der Zone über AC3 Temperatur herrschen Temperaturen von 900 °C oder mehr vor. In der Zone mit geringerer Temperatur eine die relativ dazu bezogen geringere Temperatur von beispielsweise weniger als 800 °C, insbesondere auch weniger als 700 °C.

Der geforderte, scharf berandete Übergangsbereich von wenigen Millimetern kann somit aufgrund von Wärmeleitung sich bis auf einen oder mehrere dutzend Zentimeter innerhalb des Bauteils einstellen, dies ist jedoch unerwünscht.

Eine weitere Problematik besteht darin, dass vorbeschichtete Bauteile, insbesondere mit einer metallischen Vorbeschichtung versehene Bauteile zunächst vollständig durchlegieren müssen, um mit der Vorbeschichtung eine intermetallische Phase auszubilden. Hierzu ist eine vollständige Erwärmung des gesamten Bauteils auf über AC3 Temperatur notwendig. Die Platine ist dann jedoch nicht partiell temperiert.

Weiterhin ist aus der DE 10 2017 107 549 A1 eine Temperierstation zur partiellen Wärmebehandlung eines metallischen Bauteils mit mindestens einer Tangentialdüse in der Temperierstation bekannt.

Aufgabe der vorliegenden Erfindung ist es, eine Möglichkeit aufzuzeigen, großserientauglich, Stahlblechplatinen partiell präzise unterschiedlich zu temperieren und optional die Möglichkeit des Durchlegierens bereitzustellen.

Die zuvor genannte Aufgabe wird erfindungsgemäß mit einer Anordnung aufweisend einen Ofen mit den Merkmalen im Anspruch 1 gelöst.

Vorteilhafte Ausgestaltungsvarianten der Erfindung sind in den abhängigen Ansprüchen beschrieben.

Ein verfahrenstechnischer Teil der Aufgabe wird hier mit den Merkmalen im Patentanspruch 14 gelöst.

Der Ofen zur Wärmebehandlung von Stahlblechen wird insbesondere verwendet, um Bauteile zum Warmumformen und Presshärten herzustellen und ist als Durchlaufofen ausgebildet. Hierbei können ebene Stahlblechplatinen, im Folgenden auch Platinen oder Stahlblech oder auch Bauteil bzw. Stahlblechbauteile, genannt, behandelt werden. In dem Ofen selbst sind mindestens zwei Zonen mit voneinander verschiedenen Temperaturen ausgebildet, wobei zwischen den zwei Zonen eine Trennwand vorhanden ist. Zwischen dem Stahlblech und der Trennwand ist dabei im geschlossenen Zustand ein Spalt vorhanden. Ferner ist eine Rohrkühldüse in dem Ofen angeordnet. Die Rohrkühldüse ist dabei insbesondere an bzw. in der Trennwand angeordnet und besonders bevorzugt als Rohr mit mehreren Austrittsöffnungen ausgebildet. Die Rohrkühldüse weist Öffnungen auf, die in Vertikalrichtung nach unten zeigend, ausgebildet ist. Die Rohrkühldüse ist oberhalb des Stahlbleches angeordnet. Ein Kühlmedium, insbesondere ein gasförmiges Kühlmedium kann somit aus der Rohrkühldüse austreten auf das Stahlblechbauteil. Die Rohrkühldüse ist dabei in Richtung zu der relativ kühleren Zone angeordnet. Die Rohrkühldüse kann auch als linienförmige Kühldüse bezeichnet werden. Es können somit Übergangsbereiche der verschiedenen Temperierung in dem Stahlblech mit einer Breite kleiner gleich 100 mm erreicht werden.

Zusätzlich ist bevorzugt vorgesehen, dass eine Flächenkühldüse in der relativ kälteren Zone angeordnet ist. Die Flächenkühldüse ist ebenfalls auf die Vertikalrichtung bezogen, oberhalb des Stahlblechs angeordnet. Die Flächenkühldüse ist als eine Vielzahl von Austrittsöffnungen bzw. Düsen bzw. Düsenöffnungen anzusehen, die somit eine Fläche mit einem Kühlmedium beaufschlagen bzw. bedüsen. Es kann sich bei der Flächenkühldüse somit um eine Ansammlung von mehreren Dutzend oder sogar mehreren hundert Kühlaustrittsöffnungen bzw. Kühldüsen handeln. Die Flächenkühldüse kann beispielsweise als Platte ausgebildet sein, die Austrittsöffnungen aufweist und dann eine große Fläche mit einem Kühlmittel beaufschlagen können. Diese Flächenkühldüse kann auch beispielsweise durch viele in Vertikalrichtung herabzeigende Schläuche oder Rohre ausgebildet sein, die dann jeweils eine Austrittsöffnung oder auch einen Düsenkopf als Austrittsöffnung haben, in Summe jedoch ebenfalls eine Fläche bedecken. Auch kann eine weitere Flächenkühldüse unterhalb des Stahlblechs angeordnet sein.

Besonders bevorzugt ist der Ofen ein Durchlaufofen, wobei eine erste Zone eine Temperatur gleich oder größer der AC3 Temperatur aufweist, mithin eine Temperatur größer 900 °C aufweist. Relativ dazu gesehen, ist dann eine zweite Zone eine geringere Temperatur aufweisend.

Es kann eine dritte oder auch weitere Zonen vorhanden sein, beispielsweise kann die dritte Zone vollständig vorgeschaltet sein und eine Temperatur größer gleich der AC3 Temperatur aufweisen, um eine Vorbeschichtung zunächst mit der Platine durchzulegieren. Diese kann auch als Vorlegierungsstrecke bezeichnet werden. Ein Stahlblech, welches dann in die zwei nebeneinander angeordneten Zonen mit voneinander verschiedenen Temperaturen geführt wird, wird in der relativ kühleren Zone gekühlt. Hier herrscht eine Temperatur von beispielsweise zwischen 400 und 800 °C, insbesondere zwischen 550 und 700 °C vor.

Auch kann die dritte oder eine weitere, beispielsweise vierte oder andere Zone vollständig der getrennten Zonen mit unterschiedlichen Temperaturen nachgeschaltet sein, um nach der getrennten Temperierung nochmals eine Homogenisierung bei der Temperaturbeaufschlagung hervorzurufen.

Mit dem erfindungsgemäßen Ofen kann somit aufgrund der Rohrkühldüse an bzw. in der Trennwand ein scharf berandeter thermischer Übergangsbereich in dem Stahlblech erzeugt werden, um insbesondere in dem nachfolgenden Warmumform- und Presshärteprozess zwei Bereiche mit voneinander verschiedenen Festigkeiten an dem Bauteil einzustellen. Insbesondere wird der relativ kältere Bereich an dem Stahlblech in sich homogen in Verbindung mit der Flächenkühldüse temperiert. Die Rohrkühldüse sorgt für einen scharf berandeten Übergangsbereich zu dem Bereich mit höherer Temperatur. Die Rohrkühldüse stellt somit eine Art Temperaturvorhang bereit.

Hierbei kann dann ein konventionelles Warmumformen- und Presshärtewerkzeug verwendet werden. Es müssen somit nicht spezielle Maßnahmen bzw. Vorkehrungen in dem Warmumform- und Presshärtewerkzeug selbst vorgenommen werden, um voneinander verschieden temperierte Bereiche herzustellen.

Ein weiterer Vorteil ist insbesondere bei einer integrierten Vorlegierungsstrecke, dass das Bauteil nicht zunächst wieder gekühlt werden muss, um im Anschluss daran erneut partiell aufgewärmt zu werden. Insbesondere kann somit Energie gespart werden, das Bauteil sowohl durchlegiert als auch im Anschluss daran voneinander partiell verschieden temperiert werden.

In einer weiteren bevorteilten Ausführungsvariante ist die Rohrkühldüse als Rohr ausgebildet. Dieses Rohr kann optional zusätzliche Austrittsöffnungen aufweisen, die in einem Winkel zwischen der Vertikalrichtung und der Horizontalrichtung angeordnet sind. Es kann somit ein Kühlmedium auf die Vertikalrichtung bezogen, nach unten direkt auf das Stahlblech gerichtet sein. Ferner können durch die zusätzlichen Öffnungen, die in einem Winkel auf die Vertikalrichtung bezogen, von plus und/oder minus 0 bis 70 Grad, zur Vertikalrichtung nach unten angeordnet sind, auch leicht schräg thermisch auf den kühleren Bereich eingewirkt werden. Hierdurch ist es möglich, einen scharf berandeten Übergangsbereich zwischen den voneinander verschiedenen Bereichen mit verschiedenen Temperaturen an der Stahlblechplatine einzustellen. Die erfolgende Wärmeleitung innerhalb des Übergangsbereiches in dem Stahlblech kann somit bestmöglich hinsichtlich eines scharf berandeten Übergangsbereiches eingeregelt werden. Auch können weitere Öffnungen in dem Rohr vorhanden sein, die in seitlichen Winkeln zur Vertikalrichtung angeordnet sind. Weiterhin besonders bevorzugt ist die Rohrkühldüse, insbesondere das Rohr in oder an der Trennwand, insbesondere einem auf die Vertikalrichtung bezogen, unteren Ende der Trennwand angeordnet. Auch kann die Rohrkühldüse, insbesondere das Rohr in einem horizontalen Abstand kleiner als 50 mm zu dem unteren Ende der Trennwand angeordnet sein. Auch durch diese Maßnahme ist es möglich, den Übergangsbereich möglichst scharf berandet einzuregeln. Weiterhin besonders bevorzugt ist in der Trennwand eine Ausnehmung, insbesondere ein Stufenabsatz zur Aufnahme der Rohrkühldüse, insbesondere des Rohres, ausgebildet.

Zusätzlich können, um in der relativ kühleren Zone des Ofens die Temperatur einzuregeln, zusätzliche Strahlrohre, insbesondere kühlende Strahlrohre angeordnet sein. Diese durchfließt ein Kühlmedium, so dass der Bereich des Stahlbleches gekühlt wird. Die kühlenden Strahlrohre sind dann in ihrer Funktion als Körper zum Wärmeentzug ausgebildet. Mithin wird eine entsprechende Übertemperatur in der kühleren Zone des Durchlaufofens entzogen. Beispielsweise kann durch ein Strahlrohr, welches eigentlich zur Heizung genutzt wird, ein Kühlmedium geleitet werden und über das Kühlmedium der kühleren Zone Wärme entzogen werden. Es ist somit möglich, über das Strahlrohr die kühlere Zone ggf. geringfügig nachzuheizen, mithin eine höhere Temperatur einzustellen. Auch kann in einem nicht partiellen Betrieb, das heißt in einer vollständig homogenen Erwärmung, das Strahlrohr als Heizrohr genutzt werden, so dass in der Zone ebenfalls eine höhere Temperatur eingestellt wird.

Die Trennwand selbst ist insbesondere vertikal verfahrbar, insbesondere einstellbar. Somit können unterschiedliche Dicken des Stahlblechs bzw. Konturen eines evtl. Bauteils hinsichtlich des Vorhandensein eines Spaltes optimal eingestellt werden. Alternativ oder ergänzend ist die Trennwand jedoch auch horizontal verfahrbar bzw. einstellbar. Hierdurch ist es möglich, den Übergangsbereich und somit die jeweiligen Größen der Bereiche mit voneinander verschiedenen Temperaturen der Stahlblechplatine an die geforderten Eigenschaften einzustellen. Die Verfahrbarkeit erlaubt auch die konventionelle Betriebsweise des Ofens ohne partielle Abkühlung. In diesem Fall wäre die Trennwand auf die Vertikalrichtung möglichst weit angehoben, mithin faktisch kaum in dem Ofen vorhanden.

In dem Ofen selbst ist weiterhin ein Fördersystem angeordnet. Das Fördersystem weist insbesondere Hubbalken und/oder Pendelförderer auf. Im Gegensatz zu Förderrollen erfolgt somit über das Fördersystem selbst wiederum keine Wärmeableitung bzw. Wärmebeeinflussung. Jeder Kontaktbereich mit dem Stahlblech weist somit seine individuelle Temperatur auf und zwar in Längsrichtung, als auch in Querrichtung. Auch diese Maßnahme begünstigt wiederum das gezielte Einstellen von verschiedenen Temperaturbereichen in dem Stahlblech. Insbesondere in Querrichtung zur Durchlaufrichtung durch den Durchlaufofen sind die mit der Blechplatine in Kontakt stehenden Element des Fördersystems (Hubbalken, Fahrbalken, Ketten) physisch getrennt. Somit erfolgt auch eine thermische Trennung, so dass eine Wärmeleitung in Querrichtung durch das Fördersystem möglichst nicht begünstigt und/oder vermieden wird.

In besonders bevorzugter Ausgestaltungsvariante weist das Fördersystem Hubbalken und Fahrbalken auf. Die Hubbalken berühren dabei bevorzugt das Bauteil, mithin das Stahlblech. Die Fahrbalken sind zur Fortbewegung durch den Ofen vorgesehen. Die Fahrbalken können insbesondere eine Pendelbewegung ausführen, mithin werden sie vor- und zurückgefahren. Hierzu sind die Fahrrbalken bevorzugt an einer Pendelkkette montiert. Insbesondere können jedoch auch Fahrbalken bzw. Fahrbalkenabschnitte auf Antriebsrollen aufgelegt sein. Durch Ändern der Drehrichtung der Antriebsrollen wird dann eine Vor- bzw. Zurückfahrbewegung ermöglicht. Eine weitere Alternative sieht vor, dass Antriebsrollen in Radialrichtung über die Oberfläche der Antriebsrollen gerichtete Abstandshalter aufweisen. Bei angehobenen Hubbalken wird somit die Blechplatine in Durchlaufrichtung nicht bewegt, sondern durch die Hubbalken gehalten. Bei Absetzen wird die Blechplatine über die Abstandshalter der Antriebsrollen in Durchlaufrichtung bewegt. Die Abstandshalter auf den Antriebsrollen sind wiederum in Querrichtung getrennt, so dass hier keine Wärmeleitung auftritt. Die Pendelkette kann in dem Ofen umlaufend sein, jedoch auch nur durch die Länge des Ofens, um dann über die Pendelkette die Vor- und Zurückbewegung der Fahrbalken zu ermöglichen. Das Bauteil selbst wird durch die Hubbalken angehoben und liegt dann im angehobenen Zustand auf den Hubbalken auf. Die Fahrbalken können dann unabhängig von dem Bauteil und auch unabhängig von den Hubbalken eine Vor- bzw. Zurückbewegung ausführen. Ist beispielsweise der Fahrbalken zurückgefahren, werden die Hubbalken abgesenkt und das Bauteil in Form des Stahlblechs dann auf den Fahrbalken abgelegt und in Durchlaufrichtung weiter transportiert. Ist die Pendelbewegung in Durchlaufrichtung abgeschlossen, wird das Stahlblech wiederum durch die Hubbalken angehoben und die Fahrbalken werden zurückgeführt. Im Anschluss wird das Bauteil wiederum abgelegt und die Fahrbalken fahren erneut in Durchlaufrichtung durch den Ofen. Somit wird ein sukzessiver Transport bzw. ein sequentieller Transport durch den Durchlaufofen ermöglicht.

Die Fahrbalken führen ihre Pendelbewegung maßgeblich in einer thermischen Zone des Durchlaufofens aus, so dass das Bauteil nicht negativ in den unterschiedlich temperierten Zonen durch die Fahrbalken bzw. Hubbalken beeinflusst wird.

Dies bietet wiederum den Vorteil, dass die Hubbalken, aber auch Fahrbalken, auch in Durchlaufrichtung getrennt sind und hier keine negative Wärmebeeinflussung stattfindet. Insbesondere, wenn der relativ kälteren Zone eine anders temperierte Zone vorgelagert oder nachgelagert, jeweils bezogen auf die Durchlaufrichtung, ist, so verbleiben jedoch die Hubbalken im Wesentlichen in ihrem thermischen Abschnitt bzw. in ihrer Zone und nehmen dabei die Temperatur der Zone an. Die Hubbalken erfahren somit keine wesentliche Temperaturänderung und durchlaufen gerade nicht vollständig erst eine Zone und anschließend daran eine relativ darauf bezogene andere Temperatur in einer weiteren Zone. Auch dies begünstigt eine temperaturgenaue Einstellung in der Platine.

Besonders bevorzugt weist insbesondere die kältere Zone mindestens drei Fahrbalken bzw. eine Länge von mindestens drei Hubbalken auf. Somit ist sichergestellt, dass zumindest ein in der Mitte angeordneter Hubbalken und/oder Fahrbalken während der Pendelbewegung immer vollständig in der kälteren Zone verbleibt. Der Hubbalken bzw. Fahrbalken am Eintritt und der Hubbalken am Austritt, jeweils bezogen auf die Durchlaufrichtung, der kälteren Zone kann zumindestens abschnittsweise in eine anders temperierte Zone hineinbewegt werden. Das Transportsystem durch den Durchlaufofen kann auch als separater Erfindungsgedanke gesehen werden. Mithin kann das Transportsystem auch ohne Flächenkühldüse bzw. Rohrkühldüse den Ofen durchgreifend angeordnet sein.

Eine weitere bevorzugte Maßnahme ist, dass eine Trennwand auf die Vertikalrichtung bezogen unterhalb des Stahlblechs angeordnet ist. Besonders bevorzugt kann alternativ oder ergänzend zu der unteren Trennwand ebenfalls eine Rohrkühldüse angeordnet sein. Dies wird zum einen besonders bevorzugt ermöglicht durch ein Fördersystem mit Hubbalken bzw. Pendelförderern, da im Gegensatz zu Transportrollen, somit auch längs der Transportrichtung eine untere Trennwand angeordnet werden kann. Als weiteres kann hier wiederum insbesondere die Temperatur in den verschiedenen Bereichen optimal eingeregelt werden und der Übergangsbereich scharf berandet hergestellt werden. Ebenfalls optional ergänzend kann die Unterseite des Stahlblechs mit einer unteren Flächenkühldüse gekühlt werden. Eine ergänzende Kühlung von unten ist insbesondere bei modularer Ausführung eines Durchlaufofens mit mehreren Zonen günstig für ein erstes Ofenmodul, was in Durchlaufrichtung einer homogen temperierten dritten Ofenzone direkt nachgelagert ist, so dass eine maximale Kühlwirkung in der zweiten Zone erreicht wird. Gleichsam ist diese Ausführungsform mit ergänzender Kühlung von unten auch für einen Chargenofen bzw. Kammerofen anwendbar, also für Ofentypen, worin die Blechplatine nicht durchlaufend und/oder kontinuierlich bewegt wird.

Folglich gelten alle beschriebenen Maßnahmen hinsichtlich der Rohrkühldüse und/oder der Flächenkühldüse, sowohl von oben als auch von unten, als eigenständiger Erfindungsgedanke in einem allgemeinen Ofen. Das heißt, es muss nicht in einem Durchgangsofen angeordnet sein, sondern kann auch in einem Chargenofen bzw. einem Etagenofen ausgebildet sein.

Weiterhin besonders bevorzugt ist ein Zentriersystem an dem Fördersystem angeordnet bzw. in das Fördersystem integriert. Auch diese Maßnahme ermöglicht es, dass das zu temperierende Stahlblech optimal ausgerichtet, die voneinander verschiedenen Temperaturzonen in dem Ofen durchläuft und somit der Übergangsbereich exakt an der vorgegebenen Position des Stahlblechs eingestellt wird. Das Temperiersystem kann beispielsweise durch Zentrierdorne bzw. Zentrierstifte ausgebildet sein. Auch können entsprechende Zentrierdorne bzw. Zentrierstifte relativ zu den Hubbalken bzw. Pendelförderern verfahrbar angeordnet sein.

Auch können zumindest längenabschnittsweise Transportrollen in dem Durchlaufofen als Fördersystem angeordnet sein. Die Transportrollen können in Ergänzung zu dem Pendelfördersystem angeordnet sein, jedoch in diesem Fall außerhalb der homogen temperierten dritten Zone des Durchlaufofens (Vorlegierungsstrecke).

Insbesondere am Eingang und/oder Ausgang des Durchlaufofens können ferner Gabelaufnahmen oder ähnliches angeordnet sein, um die Platinen einzulegen bzw. die temperierten Platinen zu entnehmen und ggf. unmittelbar in ein Warmumform- und Presshärtewerkzeug zu überführen und dort zu platzieren.

Es wird als Kühlmittel insbesondere ein gasförmiges Kühlmittel eingesetzt. Dieses wird mit einem Druck zwischen 5 und 10 bar in die Rohrkühldüse eingebracht. Der Querschnitt der Austrittsöffnungen wird bevorzugt kontinuierlich von der Seite der Zuleitung zur Rohrkühldüse kommend wegführend kleiner. Ein Druckverlust aufgrund austretendem Kühlmedium kann somit entgegengewirkt werden. Alternativ oder ergänzend wird der Querschnitt des Rohres selbst von der Zuleitung kommend nach hinten hin kleiner, so dass auch hier ein Druckverlust kompensiert wird. Die Zuleitung selbst kann an einem jeweiligen Ende des Rohres angeordnet sein, jedoch auch beispielsweise mittig in einem Rohr. Vorgenannte Ausführungen gelten dann entsprechend analog, da sie sich auf die Koppelung der Zuleitung mit dem Rohr beziehen Es kann sich um bloße Austrittsöffnungen handeln, die insbesondere einen Durchmesser von 0,5 bis 3 mm haben. Es können jedoch auch andere Düsenformen angeordnet werden. Bevorzugt haben diese einen relativ engen Abstand zueinander und einen gleichbleibenden Abstand zur Stahlblechplatine, um einen sogenannten Düsenkamm bzw. Luftvorhang auszuüben.

Weiterer Bestandteil der vorliegenden Erfindung ist auch ein Verfahren zum Betreiben des Ofens. Das Verfahren umfasst somit insbesondere das Herstellen von warmumgeformten und pressgehärteten Bauteilen mit den Schritten:
- Bereitstellen einer Blechplatine aus einer härtbaren Stahllegierung, vorzugsweise mit einer metallischen Vorbeschichtung, insbesondere auf Aluminiumsiliciumbasis
- zumindest partielles Erwärmen der Stahlblechplatine auf größer gleich Austinitisierungstemperatur (AC3 Temperatur) der Stahllegierung
- bevorzugt Durchlegierung der Vorbeschichtung
- optional partielles Nachtemperieren auf einen Bereich größer AC3 Temperatur und einen Bereich unter AC3 Temperatur
- Überführen in ein Warmumform- und Presshärtewerkzeug und Warmumformen und Presshärten in wenigstens einer Werkzeugstufe.

Insbesondere kann durch die erfindungsgemäße Anordnung mittels der Rohrkühldüse ein Übergangsbereich in der Platine kleiner 100 mm, insbesondere zwischen 50 und 80 mm temperiert werden. Dieser Übergangsbereich in der Platine entspricht später auch der Übergangsbereich von hartem zu weichem Bereich in dem hergestellten warmumgeformten und pressgehärteten Bauteil. Durch das erfindungsgemäße Kühlkonzept ist ein präziser enger Übergangsbereich in der Platine temperierbar. Im Zuge der Erfindung ist unter Übergangsbereich ein Flächenbereich mit einem Temperaturabfall von Temperatur der Platine in der ersten Zone zu der Temperatur der Platine in der zweiten Zone zu verstehen. Dieser Übergangsbereich ist durch das anschließende Warmumformen und Presshärten dann als ein Flächenbereich zu sehen, in dem die Härte bzw. Zugfestigkeit übergeht von hartem zu weichem Bereich. Bevorzugt weist das Bauteil in dem härteren Bereich eine Zugfestigkeit größer gleich 1200 MPa, insbesondere größer gleich 1400 MPa, besonders bevorzugt größer gleich 1500 MPa, auf. In dem weicheren Bereich eine Zugfestigkeit kleiner 1000 MPa, bevorzugt zwischen 550 und 750 MPa. Der Übergangsbereich ist dann der Bereich zwischen diesen zwei Härtebereichen.

Durch oben beschriebenes Förderkonzept mit Hubbalken und Fahrbalken im Durchlaufofen, alternativ auch durch erwähntes Zentriersystem im Rollenherdofen wird zudem erreicht, dass die Lage des sehr engen an jedem Bauteil eingestellten Übergangsbereichs auch innerhalb eines Fertigungsloses von Bauteil zu Bauteil kaum schwankt. Mit anderen Worten wird sowohl durch das Zentriersystem, insbesondere aber auch durch die Verwendung des genannten Förderkonzepts erreicht, dass die Lagetoleranz des Übergangsbereichs bezogen auf die Oberfläche der Blechplatine und am fertigen Bauteil kleiner als 30 mm, insbesondere kleiner als 20 mm beträgt. Die Lagetoleranz bezieht sich auf das Fördersystem.

In Verbindung mit dem zuvor genannten Temperiersystem hinsichtlich der Rohrkühldüse und Flächenkühldüse ist dann die Lagetolerenz derart zu verstehen, dass der Übergangsbereich kleiner 100 mm, insbesondere zwischen 50 und 80 mm mit einer derartigen Präzision in der Großserienproduktion hergestellt werden kann, dass eine Abweichung in der Lage geringer als 30 mm, besonders bevorzugt geringer als 20 mm ist.

Weitere Vorteile, Merkmale, Eigenschaften und Aspekte der vorliegenden Erfindung sind Gegenstand der nachfolgenden Beschreibung. Diese dient dem einfachen Verständnis der Erfindung. Es zeigen:
- Figur 1a, b und c: verschiedene Ansichten durch eine erste Ausführungsvariante des erfindungsgemäßen Ofens,
- Figur 2aundb: eine jeweilige Längsschnittansicht durch einen erfindungsgemäßen Ofen mit Transportsystem,
- Figur 3a und b: ein Ofen, aufgeteilt in verschiedene Module,
- Figur 4: eine Querschnittsansicht durch einen erfindungsgemäßen Ofen,
- Figur 5a bis f: verschiedene Strömungsbilder und
- Figur 6: einen Querschnitt durch eine erfindungsgemäße Flächenkühldüse, als Rohr ausgebildet.

In den Figuren werden für gleiche oder ähnliche Bauteile dieselben Bezugszeichen verwendet, auch wenn eine wiederholte Beschreibung aus Vereinfachungsgründen entfällt.

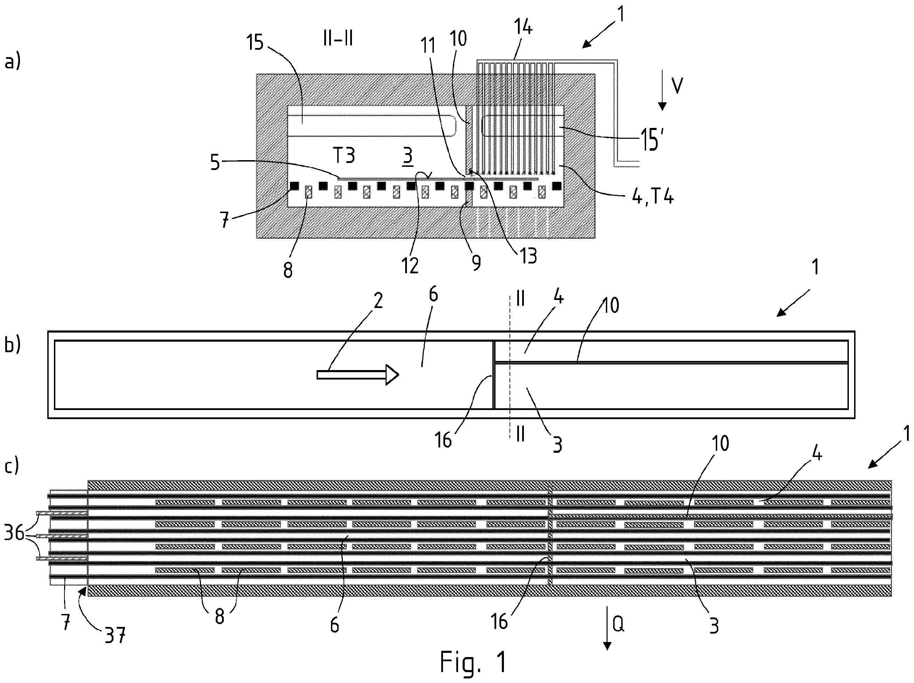

Figur 1a, b und c zeigen einen erfindungsgemäßen Ofen 1 in einer Querschnittsansicht sowie zwei Draufsichten bzw. Längsschnitte. Figur 1a zeigt dabei die Querschnittsansicht gemäß der Schnittlinie II-II in Figur 1b. Figur 1b zeigt eine Draufsicht auf den Ofen 1, eingeteilt nach unterschiedlichen Temperierzonen mit unterschiedlicher Temperatur und Figur 1c zeigt eine Draufsicht mit einem Fördersystem.

Gemäß Figur 1b und 1c ist der Ofen 1 hier als Durchlaufofen ausgebildet. Er hat eine Förderrichtung 2, die auf die Bildebene von links nach rechts erfolgt.

In dem Ofen 1 selbst ist eine erste Zone 3 ausgebildet, in der eine Temperatur T3 vorherrscht, die größer gleich der Austenitisierungstemperatur ist. Ferner ist eine zweite Zone 4 ausgebildet, wobei in der zweiten Zone 4 eine Temperatur T4 herrscht, die kleiner der AC3 Temperatur ist.

In dem Ofen 1 ist eine Stahlblechplatine 5 angeordnet, die durch den Innenraum des Ofens 1 und mithin durch die Zonen 3, 4 gefördert wird. Gemäß Figur 1b ist erkennbar, dass eine dritte Zone 6 vorgeschaltet ist. Die dritte Zone 6 kann dabei insbesondere als Vortemperaturzone ausgebildet sein bzw. auch als Durchlegierungsstrecke, um beispielsweise eine Vorerwärmung vorzunehmen und/oder eine Durchlegierung zur Bildung einer intermetallischen Phase bei einer vorbeschichteten Stahlblechplatine 5 vorzunehmen.

Damit die Stahlblechplatine 5 in Förderrichtung bzw. Transportrichtung 2 durch den Ofen 1 transportiert werden kann, sind nicht näher dargestellte Fahrbalken an einer Pendelkette angeordnet. Gemäß der Längsschnittansicht in Draufsicht auf Figur 1c sind mehrere dieser Pendelketten den Ofen 1 durchgreifend parallel zueinander angeordnet. Auf den Pendelketten sind dann wie gesagt, nicht näher dargestellte Fahrbalken angeordnet. Damit die Platine angehoben werden kann, so dass die Fahrbalken die Pendelbewegung ausführen kann, sind ferner Hubbalken 8 vorgesehen. Die Hubbalken 8 sind gemäß der Querschnittsansicht in Figur 1a abgesenkt. Mithin liegt die Platine auf den Fahrbalken der Pendelkette auf. Würden nunmehr die Hubbalken 8 in Vertikalrichtung angehoben, wird die Platine ebenfalls dadurch angehoben. Die Pendelkette kann dann die Pendelbewegung zurück ausführen. Die Fahrbalken sind in Förderrichtung ebenfalls physisch getrennt angeordnet. Die Hubbalken 8 sind ebenso erkennbar in Figur 1c in Längsrichtung durch den Ofen getrennt voneinander angeordnet. Es können somit ein oder mehrere Stahlblechplatinen jeweils fortlaufend auf den Hubbalken abgelegt sein bzw durch die Hubbalken 8 angehoben werden sein.

Es können jeweils in Längsrichtung (Förderrichtung 2) partielle Hubbalken 8 angeordnet sein. Insbesondere sind diese jedoch in Längsrichtung, aber auch in Querrichtung unterteilt. Hierdurch ist es möglich, dass optional auch eine untere Trennwand 9 angeordnet werden kann. Sowohl die Ablageschienen als auch die Hubbalken 8 sind insbesondere in Querrichtung voneinander getrennt ausgebildet. Insbesondere in dem Ofenabschnitt, in welchem zwei partiell voneinander verschiedene Temperaturen ausgebildet sind, erfolgt somit durch das Transportsystem keine nachteilige Wärmeleitung.

Ferner ist ein Einlegesystem im Bereich des Eingangs 37 des Durchlaufofens 1 angeordnet. Hierbei handelt es sich um Gabelschienen 36, die in Längsrichtung in den Ofen 1 einfahren und zwischen den Pendelketten eingreifen und hier dann eine nicht näher dargestellte Stahlblechplatine ablegen. Ein gleiches System kann auch am Ausgang angeordnet sein, was hier jedoch nicht näher dargestellt ist. Alternatik können am Ausgang aber auch ein Greifersystem angeordnet sein, dass die Platinen die temperierten Stahlbleche unmittelbar in ein Warmumform- und Presshärtewerkezeug eingelegt werden.

Zwischen den zwei Zonen 3, 4 ist insbesondere jedoch eine Trennwand 10 ausgebildet, die bevorzugt in Vertikalrichtung V angehoben bzw. abgesenkt werden kann. Unterhalb der Trennwand 10 ist ein Spalt 11 ausgebildet, der zwischen Unterseite der Trennwand und der Oberfläche 12 der Platine 5 verbleibt.

Damit nunmehr innerhalb der Stahlblechplatine 5 keingroßer Temperaturuntrschied aufgrund von Wärmeleitung erfolgt, jedoch auch an dem Spalt keine Luftströmung von der wärmeren ersten Zone 3 in die kältere Zone 4 erfolgt, ist eine Rohrkühldüse 13 ausgebildet, insbesondere in Form eines Rohres. Die Rohrkühldüse 13 bildet aufgrund des ausströmenden Kühlmittels eine Art Temperaturvorhang, mithin eine Verlängerung der Trennwand 10. Dieses lässt ein entsprechendes Kühlmedium bzw. Kühlgas auf die Stahlblechplatine 5 strömen. Durch die jeweilige Temperaturzone 3, 4 stellt sich jeweils ein Bereich in der Stahlblechplatine 5 mit voneinander verschiedenen Temperaturen ein. Ein Übergangsbereich in der Stahlblechplatine 5 zwischen den zwei Bereichen mit voneinander verschiedener Temperatur kann somit besonders scharf berandet werden.

Optional kann ferner ein Kühlsystem in Form einer Flächenkühldüse 14in der zweiten Zone 4 angeordnet sein. In der ersten Zone 3 ist bevorzugt weiterhin ein Strahlrohr 15 zum Heizen der ersten Zone 3 angeordnet. Es kann weiterhin eine Trennwand 16 vorgesehen sein, welche die dritte Zone 6 von der ersten und zweiten Zone 3, 4 quer zur Transportrichtung abschottet. Die Trennwand 16 kann auch nur teilweise die zweite Zone 4 verdeckend ausgebildet sein. Ferner kann ein Körper 15' zum Wärmeentzug angeordnet sein. Dabei kann es sich um ein Strahlrohr handeln, durch welches ein Kühlmedium geleitet wird, so dass der kühleren Zone 4 des Ofens Wärme entzogen wird.

Die Trennwände sind insbesondere thermisch isoliert.

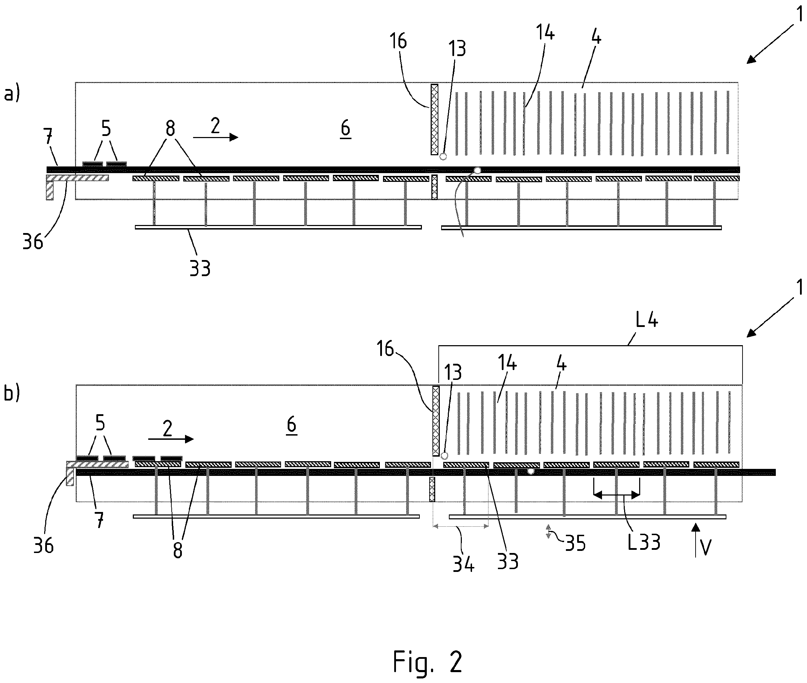

Figuren 2a und 2b zeigen einen jeweils vertikalen Längsschnitt durch einen Durchlaufofen 1. Gezeigt sind hier eine dritte Zone 6 als beispielsweise Vorlegierungsstrecke sowie eine in Transportrichtung 2 ausgebildete Zone 4 mit den Flächenkühldüsen 14. Ebenfalls angeordnet ist eine Rohrkühldüse 13 unmittelbar nach dem Eintritt in die kühlere Zone 4, mithin hinter der Trennwand 16, welche in Querrichtung verläuft. Zu erkennen ist, dass die Hubbalken 8 sich gemäß Figur 2a unterhalb der Pendelkette 7 befinden. Die Hubbalken 8 selbst sind an einem Balken 33 befestigt. Die Balken 33 führen eine Hubbewegung 35 aus. Die Pendelstrecke ist in Figur 2b dargestellt. Die Pendelkette ist hier exemplarisch in Transportrichtung in den Durchlaufenofen 1 hineinbewegt. Die Länge der Pendelstrecke ist bei Bezugszeichen 34 dargestellt. Die Hubbalken 8 sind in Hubrichtung 35 angehoben. Nunmehr würde die Pendelbewegung entgegengesetzt ausgeführt werden und dann die Hubbalken abgesenkt werden, so dass mit der Pendelbewegung in Durchlaufrichtung die Stahlblechplatinen mitgenommen würden. Im Anschluss werden erneut die Hubbalken 8 angehoben und die Pendelbewegung beginnt von neuem. Zunächst verbleiben die Hubbalken 8 jeweils in ihrer temperierten Zone. Mithin nehmen die Hubbalken 8 die Temperatur der Zone selbst an und beeinflussen damit nicht negativ die zu erwärmende Stahlblechplatine. Die Pendelstrecke ist ebenfalls, bezogen auf die Länge des Durchlaufofens 1 nur gering, so dass der Teil der Pendelkette und/oder der nicht näher dargestellte Fahrbalken sehr unterschiedlichen Temperaturen ausgesetzt ist, nur eine geringe Pendelbewegung erfährt. Spätestens nach einer Länge, welche der Pendelstrecke selbst entspricht, ist der nächste Fahrbalken bzw. Abschnitt der Pendelkette die Temperatur der Zone aufweisend. Eine nachteilige Wärmebeeinflussung findet hier nicht mehr statt. Bevorzugt sind somit mindestens in Längsrichtung drei Hubbalken 8 und/oder Fahrbalken in der Zone 4 angeordnet. Mithin haben drei Fahrbalken und/oder Hubbalken eine Länge, die der Länge L4 der Zone 4 entspricht. Es können jedoch auch wie hier dargestellt, mehr Hubbalken 8 und nicht näher dargestellte Fahrbalken in der Länge L4 angeordnet sein. Somit ist sichergestellt, dass im Eingangsbereich aber auch im Austrittsbereich der relativ kälteren Zone 4 maximal eine Länge eines Hubbalkens 8 bzw. Fahrbalkens den Temperautschwankungen durch das Pendeln in verschiedene Temperaturzonen ausgesetzt ist. Die nachfolgenden, bzw. vorgeschalteten Fahrbalken bzw. Hubbalken 8 jedoch temperaturstabil in der Zone gehalten sind.

Für alle vorgenannten und nachfolgenden Beispiele weist insbesondere der Durchlaufofen beispielsweise eine Gesamtstrecke von 30 bis 60 m, bevorzugt 35 bis 45 m, inbesondere 32 bis 42 m, besonders bevorzugt, 40 m auf. Insbesondere kann eine kühlere Zone 4 eine Länge L4 in Transportrichtung von 15 bis 20, bevorzugt 16 bis 18, insbesondere 17 Metern Länge aufweisen.

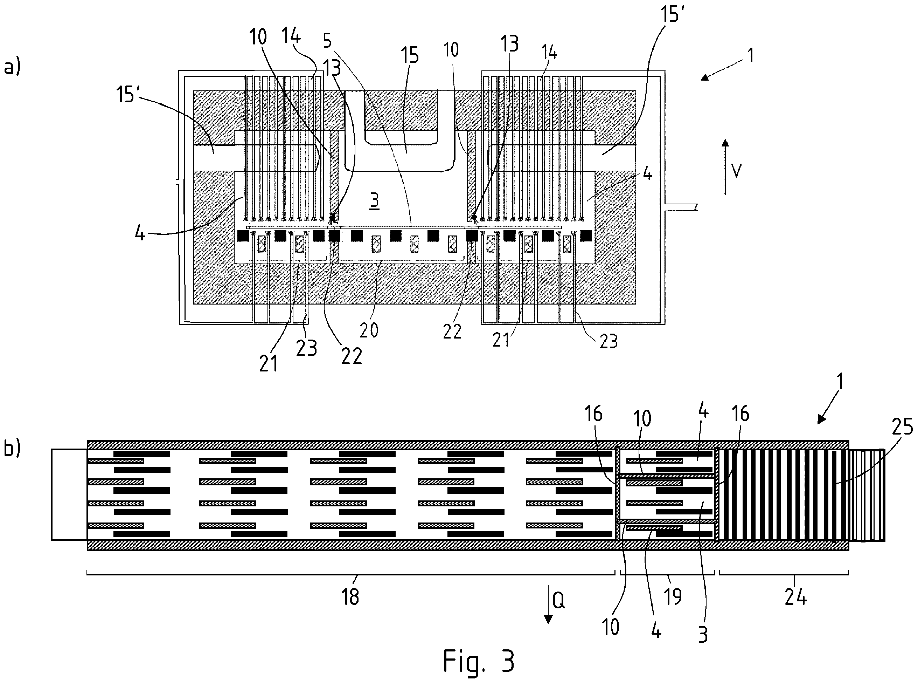

Figur 3a und b zeigen eine weitere alternative Ausgestaltungsvariante des erfindungsgemäßen Ofens 1. Hierbei sind mehrere Module angeordnet, die auch als jeweilige Ofenmodule ausgebildet sein können. Ein erstes Modul 18 dient dabei der Durchlegierung. Ferner wird eine präzise Lageorientierung vorgenommen. Ein zweites Modul 19 kann dann eingesetzt werden, um eine partielle Temperierung vorzunehmen, so dass eine erste Zone 3 und eine zweite Zone 4 mit voneinander verschiedenen Temperaturen ausgebildet sind. In der Platine bzw. in dem Stahlblech wird dann ein erster Bereich 20 mit einer Temperatur größer gleich AC3 Temperatur eingestellt sowie ein zweiter Bereich 21. Dazwischenliegend ist ein Übergangsbereich 22. Die relativ kühlere Zone 4 ist somit in Querrichtung links- und rechtsseitig angeordnet.

Optional ist hier in Figur 3a eingezeichnet, dass nicht nur das Kühlsystem 14 auf die Vertikalrichtung V bezogen von oben ausgebildet ist, sondern auch ein unteres Kühlsystem 23 angeordnet wäre, welches die Stahlblechplatine 5 von unten ebenfalls temperiert. Hierdurch kann eine schnellere und noch präzisiere Temperatureinstellung erfolgen. In Kombination mit dem erfindungsgemäßen Fördersystem ist es möglich, das entsprechende Kühlsystem 23 von unten als Flächenkühlsystem auszuführen. Einzelne Leitungen können somit zwischen den Hubbalken 8 und/oder Pendelketten 7 hindurchgreifen und somit die Unterseite der Platine 5 mit einem Kühlmittel beaufschlagen.

Ein drittes Modul 24 kann angeordnet sein, um beispielsweise nach dem Zwischenkühlen eine kurze Temperaturhomogenisierung herbeizuführen. Hier können dann Transportrollen 25 ausgebildet sein.

Exemplarisch ist ebenfalls in Figur 3a ein Zentrierdorn 26 eingezeichnet, welcher eine Zentrierung der Stahlblechplatine 5 vornimmt. Der Zentrierdorn 26 kann gegenüber dem Fördersystem in Vertikalrichtung, aber auch quer und längs zur Transportrichtung verfahren werden. Die Zentrierdorne 26 können auch in allen anderen Ausführungsvarianten ausgebildet sein.

Ferner in Figur 3b sind jeweils Trennwände 16 dargestellt, die die einzelnen Module voneinander trennen.

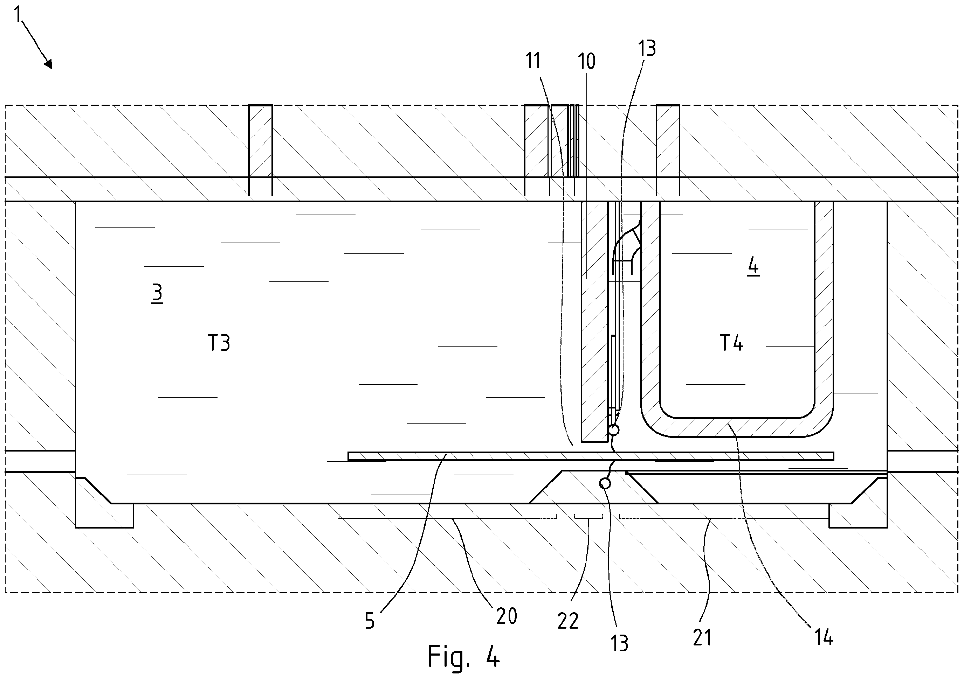

Figur 4 zeigt einen Querschnitt durch einen erfindungsgemäßen Ofen 1. Die Stahlblechplatine 5 ist dabei bereichsweise in der ersten Zone 3 mit höherer Temperatur T3 angeordnet, sowie in der zweiten Zone 4 mit relativ demgegenüber geringerer Temperatur T4. In der zweiten Zone 4 kann ein Kühlsystem 14, beispielsweise in Form eines Kühlrohres ausgebildet sein. Dieses kann entweder Kühlluft auf den zweiten Bereich 21 der Stahlblechplatine 5 mit geringerer Temperatur befördern und/oder entsprechend eine kältere Temperatur abstrahlen. Damit an dem Spalt 11 und insbesondere hier an der Trennwand 10 eine exakte Temperatur im Übergangsbereich 22 der Stahlblechplatine 5 eingestellt werden kann, ist die Rohrkühldüse 13 hier als Kühlrohr unmittelbar neben der Trennwand 10 angeordnet. Die Anordnung erfolgt dabei in der Zone mit der geringeren Temperatur. Optional kann ferner eine Rohrkühldüse 13 auch unterhalb der Stahlblechplatine 5 ebenfalls angeordnet sein. Es kann somit ein geometrisch exakter Übergangsbereich zwischen den zwei Bereichen mit voneinander verschiedener Temperatur an der Stahlblechplatine 5 eingestellt werden.

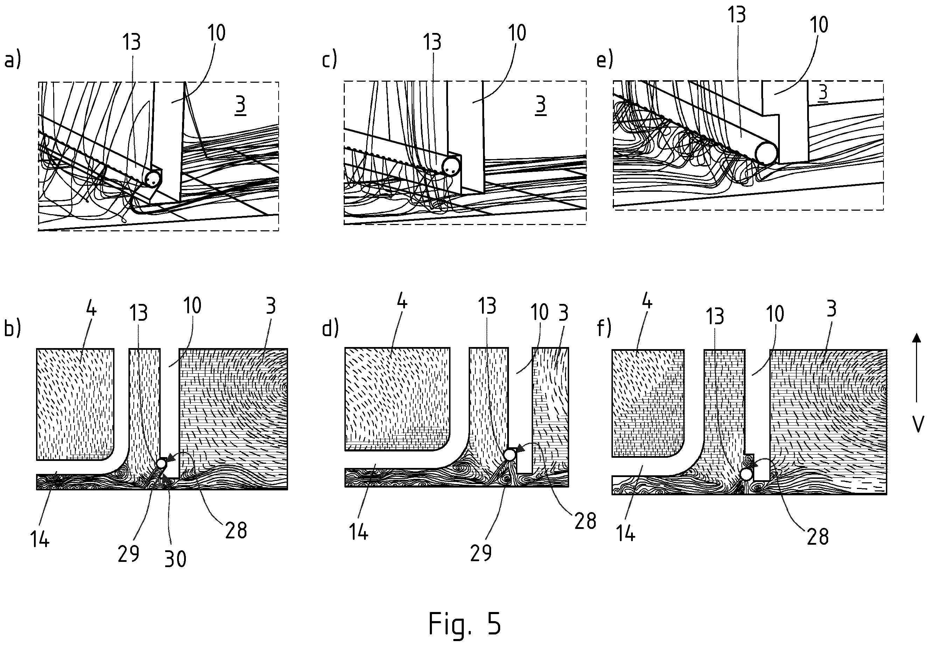

Figur 5a bis f zeigen jeweils eine perspektivische sowie Querschnittsansicht eines Strömungsbildes der erfindungsgemäßen Anordnung einer Rohrkühldüse 13. Jeweils auf die Bildebene bezogen rechts ist die wärmere erste Zone 3 in dem Ofen 1 sowie links die demgegenüber kältere Zone 4 dargestellt. Im Bereich der Trennwand 10 ist mit einer Tendenz zur kälteren Zone hin jeweils die Rohrkühldüse 13 in Form eines Kühlrohres bzw. eines Rohres angeordnet. Ferner sind in einem Winkel dazu seitlich in Richtung zur kühleren zweiten Zone 4 abstrahlend weitere Austrittsöffnungen 27 angeordnet, welche zusätzlich ein entsprechenden Kühlstrahlen 29 in Richtung der zweiten Zone 4 abstrahlen. Es kann weiterhin ein Kühlrohr für das Kühlsystem 14 in der zweiten Zone 4 angeordnet sein.

In der Trennwand 10 selbst ist am unteren Ende ein Stufenabsatz 28 angeordnet, wobei das Kühlrohr selbst dann in dem Stufenabsatz 28 positioniert ist. Es kann beispielsweise gemäß Figur 5b eine zusätzliche Schräge 30 angeordnet sein, die eine initiale Umlenkung des vertikal nach unten austretenden Kühlstrahlen 29 erzeugt. Die vertikal nach unten austretenden Kühlstrahlen 29 werden jedoch zu einem Großteil in Richtung der wärmeren ersten Zone 3 geleitet. Die durch die zusätzliche seitliche in einem Winkel angeordnete Austrittsöffnung 31 austretenden Kühlstrahlen 29 werden hingegen vollständig in die kühlere Zone abgeführt. Die Flächenkühldüse 13 erzeugt somit eine linienförmige Flächenkühlung.

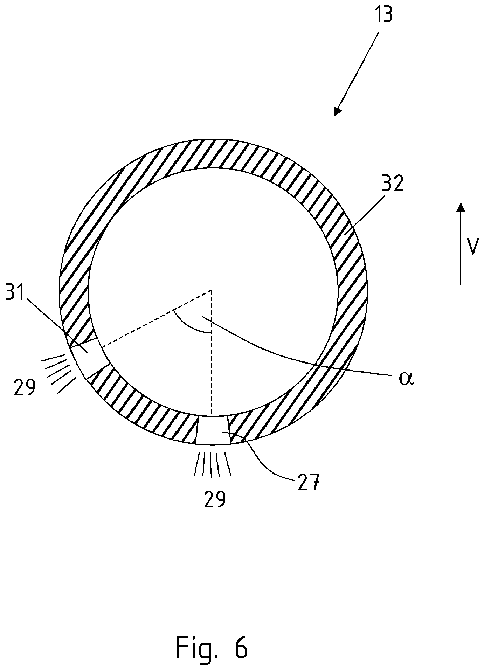

Figur 6 zeigt die Rohrkühldüse 13 in Form eine Rohres 32 im Querschnitt. Zum einen ist auf die Vertikalrichtung bezogen und die untere Austrittsöffnung 27 dargestellt. In einem Winkel α versetzt dazu, sind weitere Austrittsöffnungen 31 seitlich angeordnet. Der Winkel α beträgt vorzugsweise zwischen 0 und 90 Grad, besonders bevorzugt zwischen 20 und 40 Grad, ganz besonders bevorzugt zwischen 20 und 30 Grad. Durch diese zusätzlichen Austrittsöffnungen 31 können weitere Kühlstrahlen 29 gezielt gerichtet, zum einen in Richtung der kühleren Temperaturzone, jedoch gleichzeitig auch in Richtung der Stahlblechplatine 5 abgegeben werden. Zwischen den Austrittsöffnungen 27 und 31 können weitere nicht näher dargestellte Austrittsöffnungen angeordnet sein. Auch können auf die Bildebene bezogen, rechtsseitig von der uneren Austrittsöffnung 27 weitere nicht näher dargestellte Austrittsöffnungen angeordnet sein.

### Bezugszeichen:

- 1 -: Ofen
- 2 -: Förderrichtung
- 3 -: erste Zone
- 4 -: zweite Zone
- 5 -: Stahlblechplatine
- 6 -: dritte Zone
- 7 -: Kette
- 8 -: Hubbalken
- 9 -: untere Trennwand
- 10 -: Trennwand
- 11 -: Spalt
- 12 -: Oberfläche zu 5
- 13 -: Rohrkühldüse
- 14 -: Flächenkühldüse 15 - Strahlrohr
- 15' -: Körper für Wärmeentzug
- 16 -: Trennwand
- 17 -: Fahrbalken
- 18 -: erstes Modul
- 19 -: zweites Modul
- 20 -: erster Bereich
- 21 -: zweiter Bereich
- 22 -: Übergangsbereich
- 23 -: unteres Kühlsystem
- 24 -: drittes Modul
- 25 -: Transportrollen
- 26 -: Zentrierdorn
- 27 -: Austrittsöffnung
- 28 -: Stufenabsatz
- 29 -: Kühlstrahl
- 30 -: Schräge
- 31 -: Austrittsöffnung
- 32 -: Rohr
33 Balken

- 34 -: Pendelstrecke
- 35 -: Hubhöhe
- 36 -: Gabelschienen
- 37 -: Eingang

- V -: Vertikalrichtung
- α -: Winkel
- Q -: Querrichtung

## Patentansprüche

1. Anordnung aufweisend einen Durchlaufofen (1) zur Wärmebehandlung von Stahlblechen, insbesondere zum Warmumformen und Presshärten, wobei in dem Ofen (1) zwei Zonen (3, 4) mit voneinander verschiedenen Temperaturen ausgebildet sind und zwischen den zwei Zonen (3, 4) eine Trennwand (10) vorhanden ist und dass eine Flächenkühldüse (14) in der relativ kälteren Zone (4) angeordnet ist, **dadurch gekennzeichnet, dass** zwischen dem Stahlblech (5) und der Trennwand (10) im geschlossenen Zustand ein Spalt (11) vorhanden ist und eine Rohrkühldüse (13) ausgebildet ist, wobei die Rohrkühldüse (13) Austrittsöffnungen (27) relativ zu der Trennwand (10) in Vertikalrichtung (V) nach unten zeigend aufweist und die Rohrkühldüse (13) in Richtung einer relativ kühleren Zone (4) angeordnet ist.

2. Durchlaufofen (1) nach Anspruch 1, **dadurch gekennzeichnet, dass** es ein Durchlaufofen ist, wobei eine Zone (3) eine Temperatur gleich oder größer der AC3 Temperatur aufweist.

3. Durchlaufofen (1) nach Anspruch 1 oder 2, **dadurch gekennzeichnet, dass** die Rohrkühldüse (13) zusätzliche Austrittsöffnungen (31) aufweist, die zwischen der Vertikalrichtung (V) und Horizontalrichtung in einem Winkel (α) angeordnet sind.

4. Durchlaufofen (1) nach einem der Ansprüche 1 bis 3, **dadurch gekennzeichnet, dass** die Rohrkühldüse (13) in, an oder in einem Abstand kleiner als 50 mm zu der Trennwand (10) angeordnet ist.

5. Durchlaufofen (1) nach einem der vorangehenden Ansprüche, **dadurch gekennzeichnet, dass** in der Trennwand (10) eine Ausnehmung zur Aufnahme der Rohrkühldüse ausgebildet ist.

6. Durchlaufofen (1) nach einem der vorangehenden Ansprüche, **dadurch gekennzeichnet, dass** in einer relativ kälteren Zone (4) ein Körper (15') zum Wärmeentzug angeordnet ist.

7. Durchlaufofen (1) nach einem der vorangehenden Ansprüche, **dadurch gekennzeichnet, dass** die Trennwand (10) vertikal einstellbar ist und/oder dass die Trennwand (10) horizontal einstellbar ist.

8. Durchlaufofen (1) nach einem der vorangehenden Ansprüche, **dadurch gekennzeichnet, dass** in dem Ofen (1) ein Fördersystem angeordnet ist.

9. Durchlaufofen (1) nach einem der vorangehenden Ansprüche, **dadurch gekennzeichnet, dass** das Fördersystem Hubbalken (8) und/oder Pendelförderer umfasst.

10. Durchlaufofen (1) nach einem der vorangehenden Ansprüche, **dadurch gekennzeichnet, dass** eine Vortemperierzone (6) vorhanden ist, wobei die Vortemperierzone durch eine Trennwand (16) von den zwei Zonen (3, 4) separiert ist.

11. Durchlaufofen (1) nach einem der vorangehenden Ansprüche, **dadurch gekennzeichnet, dass** eine untere Trennwand (9) in Vertikalrichtung (V) unterhalb der Blechplatine angeordnet ist.

12. Durchlaufofen (1) nach einem der vorangehenden Ansprüche, **dadurch gekennzeichnet, dass** ein Zentriersystem vorhanden ist, dergestalt, dass das Stahlblech (5) in dem Ofen (1) zentriert wird.

13. Durchlaufofen (1) nach einem der vorangehenden Ansprüche, **dadurch gekennzeichnet, dass** die Flächenkühldüse (14) bezogen auf die Vertikalrichtung (V) oberhalb des Stahlblechs (5) angeordnet ist und optional eine zusätzliche Flächenkühldüse in der relativ kälteren Zone unterhalb des Stahlblechs (5) angeordnet ist.

14. Verfahren zum Herstellen von warmgeformten und pressgehärteten Bauteilen, mit den Schritten:
- Bereitstellen einer Blechplatine aus einer härtbaren Stahllegierung,
- Erwärmen zum Zweck des Austenitisierens der Stahllegierung und optional Durchlegierens der Vorbeschichtung in einem Durchlaufofen (1) nach wenigstens Anspruch 1,
- Warmumformen und Presshärten in wenigstens einem gekühlten Formwerkzeug,
wobei unmittelbar vor Beginn des Warmumformens in der Blechplatine ein erster Flächenabschnitt mit einer Temperatur oberhalb 800 °C und ein zweiter Flächenabschnitt mi einer zweiten, niedrigeren Temperatur oberhalb 550 °C und ein Übergangsbereich zwischen beiden Flächenabschnitten eingestellt wird, **dadurch gekennzeichnet, dass** der Übergangsbereich kleiner 100 mm eingestellt wird und optional eine Lagetoleranz des Übergangsbereichs, bezogen auf die Oberfläche der Blechplatine, kleiner als 30 mm beträgt.

## Claims

1. Arrangement having a continuous furnace (1) for the thermal treatment of steel sheets, in particular for hot forming and press hardening, wherein in the furnace (1) two zones (3, 4) are formed with temperatures different from one another and between the two zones (3, 4) a partition wall (10) is present and that a surface cooling nozzle (14) is arranged in the zone which is relatively cooler (4), **characterised in that** between the heel sheet (5) and the partition wall (10) in the closed state a gap (11) is present and a pipe cooling nozzle (13) is formed, wherein the pipe cooling nozzle (13) has outlet openings (27) pointing downwardly in vertical direction (V) relatively to the partition wall (10) and the pipe cooling nozzle (13) is arranged In the direction of a zone which is relatively cooler (4).

2. Continuous furnace (1) according to claim 1, **characterised in that** it is a continuous furnace, wherein one zone (3) has a temperature which is equal greater to the AC3 temperature.

3. Continuous furnace (1) according to claim 1 or 2, **characterised in that** the cooling nozzle (13) has additional outlet openings (31), which are arranged at an angle (a) between the vertical direction (V) and horizontal direction.

4. Continuous furnace (1) according to any of claims 1 to 3, **characterised in that** the pipe cooling nozzle (13) is arranged in, against, or at a distance of less than 50 mm from the partition wall (10).

5. Continuous furnace (1) according to any of the preceding claims, **characterised in that** in the partition wall (10) is formed a cutout for receiving the pipe cooling nozzle.

6. Continuous furnace (1) according to any of the preceding claims **characterised in that** in a zone (4) which is relatively cooler is arranged a body (15') for extracting heat.

7. Continuous furnace (1) according to any of the preceding claims, **characterised in that** the partition wall (10) can be vertically adjusted and/or that the partition wall (10) can be horizontally adjusted.

8. Continuous furnace (1) according to any of the preceding claims, **characterised in that** a conveying system is arranged in the furnace (1).

9. Continuous furnace (1) according to any of the preceding claims, **characterised in that** the conveyance system comprises lifting beams (8) and/or pendulum conveyors.

10. Continuous furnace (1) according to any of the preceding claims, **characterised in that** a pre-tempering zone (6) is present, wherein the pre-tempering zone is separated from the two zones (3, 4) by a partition wall (16).

11. Continuous furnace (1) according to any of the preceding claims, **characterised in that** a lower partition wall (9) is arranged in vertical direction (V) below the sheet metal plate.

12. Continuous furnace (1) according to any of the preceding claims, **characterised in that** a centring systems present such that the steel sheet (5) is centred in the furnace (1).

13. Continuous furnace (1) according to any of the preceding claims, **characterised in that** the surface cooling nozzle (14) is arranged above the steel sheet (5) with regard to the vertical direction (V) and optionally an additional surface cooling nozzle is arranged in the zone which is relatively cooler below the steel sheet (5).

14. Method for producing hot-formed and press-hardened components, having the steps:
- providing a metal sheet made of a curable steel alloy,
- heating for the purpose of austenitising the steel alloy and optionally fully alloying the precoating in a continuous oven (1) according to at least claim 1,
- hot forming and press hardening in at least one cool forming tool,
wherein Immediately prior to the start of the hot forming in the sheet plate a first surface portion with a temperature above 800°C and a second surface portion with a second, lower temperature above 550°C and a transition region between the two surface portions are set, **characterised in that** the transition region is set to be less than 100 mm and optionally a positional tolerance of the transition region, in relation to the surface of the metal plate, is less than 30 mm.

## Revendications

1. Agencement présentant un four continu (1) pour le traitement thermique de tôles d'acier, en particulier pour le formage à chaud et le durcissement par compression, dans lequel deux zones (3, 4) sont réalisées dans le four (1) avec des températures différentes l'une de l'autre et une paroi de séparation (10) est présente entre les deux zones (3, 4) et en ce qu'une buse de refroidissement de surface (14) est agencée dans la zone (4) relativement plus froide, **caractérisé en ce qu'**une fente (11) est présente entre la tôle d'acier (5) et la paroi de séparation (10) à l'état fermé et une buse de refroidissement tubulaire (13) est réalisée, dans lequel la buse de refroidissement tubulaire (13) présente des ouvertures de sortie (27) orientées vers le bas par rapport à la paroi de séparation (10) dans la direction verticale (V) et la buse de refroidissement tubulaire (13) est agencée en direction d'une zone (4) relativement plus froide.

2. Four continu (1) selon la revendication 1, **caractérisé en ce qu'**il s'agit d'un four continu, dans lequel une zone (3) présente une température égale ou supérieure à la température AC3.

3. Four continu (1) selon la revendication 1 ou 2, **caractérisé en ce que** la buse de refroidissement tubulaire (13) présente des orifices de sortie supplémentaires (31) qui sont agencés selon un angle (a) entre la direction verticale (V) et la direction horizontale.

4. Four continu (1) selon l'une quelconque des revendications 1 à 3, **caractérisé en ce que** la buse de refroidissement tubulaire (13) est agencée dans, sur ou à une distance inférieure à 50 mm de la paroi de séparation (10).

5. Four continu (1) selon l'une quelconque des revendications précédentes, **caractérisé en ce qu'**un évidement destiné à recevoir la buse de refroidissement tubulaire est réalisé dans la paroi de séparation (10).

6. Four continu (1) selon l'une quelconque des revendications précédentes, **caractérisé en ce qu'**un corps (15') est agencé dans une zone (4) relativement plus froide pour extraire la chaleur.

7. Four continu (1) selon l'une quelconque des revendications précédentes, **caractérisé en ce que** la paroi de séparation (10) est réglable verticalement et/ou **en ce que** la paroi de séparation (10) est réglable horizontalement.

8. Four continu (1) selon l'une quelconque des revendications précédentes, **caractérisé en ce qu'**un système de transport est agencé dans le four (1).

9. Four continu (1) selon l'une quelconque des revendications précédentes, **caractérisé en ce que** le système de transport comprend des poutres de levage (8) et/ou des convoyeurs oscillants.

10. Four continu (1) selon l'une quelconque des revendications précédentes, **caractérisé en ce qu'**une zone de pré-température (6) est présente, dans lequel la zone de pré-température est séparée des deux zones (3, 4) par une paroi de séparation (16).

11. Four continu (1) selon l'une quelconque des revendications précédentes, **caractérisé en ce qu'**une paroi de séparation inférieure (9) est agencée en dessous du flan de tôle dans la direction verticale (V).

12. Four continu (1) selon l'une quelconque des revendications précédentes, **caractérisé en ce qu'**un système de centrage est présent, de sorte que la tôle d'acier (5) est centrée dans le four (1).

13. Four continu (1) selon l'une quelconque des revendications précédentes, **caractérisé en ce que** la buse de refroidissement de surface (14) est agencée au-dessus de la tôle d'acier (5) par rapport à la direction verticale (V) et, facultativement, une buse de refroidissement de surface supplémentaire est agencée dans la zone relativement plus froide au-dessous de la tôle d'acier (5).

14. Procédé de fabrication de pièces thermoformées et durcies à la presse, comprenant les étapes suivantes consistant à :
- fournir un flan de tôle en alliage d'acier durcissable,
- chauffer dans le but d'austéniser l'alliage d'acier et facultativement d'allier à coeur le prérevêtement dans un four continu (1) selon au moins la revendication 1,
- former à chaud et durcir par compression dans au moins un moule refroidi,
dans lequel, immédiatement avant le début du formage à chaud dans la platine de tôle, une première section de surface est réglée à une température supérieure à 800 °C et une seconde section de surface est réglée à une seconde température plus basse, supérieure à 550 °C, et une zone de transition entre les deux sections de surface est réglée, **caractérisé en ce que** la zone de transition est réglée à une valeur inférieure à 100 mm et, facultativement, une tolérance de position de la zone de transition, par rapport à la surface du flan de tôle, est inférieure à 30 mm.
